(19) Europäisches Patentamt
European Patent Office
Office européen des brevets

(11) Veröffentlichungsnummer: **0 000 548**
**B1**

(12) # EUROPÄISCHE PATENTSCHRIFT

(21) Anmeldenummer: **78100448.6**

(22) Anmeldetag: **20.07.78**

(51) Int. Cl.³: **C 08 G 18/42,**
C 08 G 18/66,
C 09 J 3/16,
C 08 G 18/08,
B 29 H 9/10

(54) **Verfahren zur Herstellung von Dihydroxypolyurethane und ihre Verwendung als Klebstoff oder als Klebstoffrohstoff**

(30) Priorität: **28.07.77 DE 2734102**

(43) Veröffentlichungstag der Anmeldung:
**07.02.79 Pattentblatt 79/03**

(45) Bekanntmachung des Hinweises auf die Patenterteilung:
**23.07.80 Pattentblatt 80/15**

(84) Benannte Vertragsstaaten:
**BE DE FR GB NL**

(56) Entgegenhaltungen:
**FR - A - 2 290 460**
**US - A - 3 759 873**

(73) Patentinhaber: **BAYER AG**
**Zentralbereich Patente, Marken und Lizenzen**
**D - 5090 Leverkusen 1, Bayerwerk (DE)**

(72) Erfinder: **Meckel, Walter, Dr.**
**Zonser Strasse 9**
**D - 4040 Neuss (DE)**
**Müller-Albrecht, Horst, Dr.**
**Roggendorfstrasse 59**
**D - 5000 Köln 80 (DE)**
**Dollhausen, Manfred, Dr.**
**Herzogenfeld 21**
**D - 5068 Odenthal (DE)**
**Velker, Eugen, Dr.**
**Wilhelm-Busch-Strasse 45**
**D - 4047 Zons (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 548 B1

# Verfahren zur Herstellung von Dihydroxypolyurethanen, und ihre Verwendung als Klebstoff oder als Klebstoffrohstoff

Die Verwendung weitgehend linearer Hydroxyl-Polyurethane als Rohstoffe zum Verkleben der verschiedensten Werkstoffe wie weichmacherhaltigen PVC, Natur- und Synthesekautschuktypen mit sich selbst und anderen Materialien ist bekannt und beispielsweise in der DT—AS 1 256 822 beschrieben.

Nachteilig bei diesen Klebstoffen ist eine mangelnde Haftung an speziellen, insbesondere weichen, transparenten Gummiqualitäten, die sich nur durch einen aufwendigen, zusätzlichen Arbeitsgang verbessern läßt. Unter den zahlreichen, in der Literatur beschriebenen Vorbehandlungen der Gummioberfläche seien genannt Einstreichen der Oberfläche mit oxidierend wirkenden Säuren, wie z.B. Schwefelsäure (DT—PS 807 719), Halogenierung mit Chlor- oder Brom-abspaltenden Mitteln (DT—OS 550 823) oder Aufbringung eines Vorstrichs aus Polychloropren oder anderen halogenhaltigen Polymeren (US-Patent 3 917 742). All diese Schritte beinhalten einen zusätzlichen Arbeitsgang und wirken somit verteuernd; außerdem treten, wie z.B bei der Schwefelsäure-oder Halogenvorbehandlung, toxische Produkte auf, die aufwendige Schutzmaßnahmen erfordern.

Die Verbesserung der Haftung von Polyurethanen an verschiedenen Materialien durch Einbau von Ionen (insbesondere Kationen) wurde bereits des öfteren beschrieben (z.B. D. Dieterich, W. Keberle und H. Witt, Ang.Chemie *82*, 53—63 (1970)). Die amerikansche Patentschrift 3 653 939 beschreibt die Haffungsverbesserung von Polyurethanen an Mettalloberflächen, wen das aus Lösung angewandte Polyurethan freie Carboxylgruppen, die über die 2,2-Dimethylolpropionsäure eingebaut wurden, enthält.

Die haftung solcher Polyurethane an den verschiedensten Gummimaterialien ist aber nicht ausreichend. Insbesondere können die unzureichenden. Trennfestigkeiten von mit derart modifizierten Polyurethanen verklebten Gummimaterialien nicht durch eine einfache Erhöhung der ionischen Gruppen bzw. der Carboxylgruppen im Polyurethan erhöht werden.

Ansatzpunkte, die oben beschriebenen Nachteile zu beseitigen, sind in der DT—AS 2 113 631 zu sehen, die die Zugabe von Carbonsäuren, bevorzugt Fumarsäure zu handelsüblichen Polyurethan-Klebstofflösungen lehrt und damit eine beträchtliche Haftungsverbesserung an Gummimaterialien ohne aufwendige Vorbehandlung erzielt. Nachteilig bei diesem Verfahren ist jedoch der starke hydrolytische Angriff der zugesetzten Stoffe auf das Basispolyurethan, der zu einer erheblich verminderten Lagerstabilität der Klebstoffe und zu einer erheblich verminderten Beständigkeit der Klebungen, vornehmlich bei Temperaturbeanspruchung in feuchtem Klima führt.

Überraschenderweise wurde nunmehr gefunden, daß Dihydroxypolyurethane, welche sowohl chemisch eingebaute ionische Gruppen als auch chemische eingebaute Carboxylgruppen enthalten, und die nach dem nachstehend beschriebenen erfindungsgemäßen Verfahren hergestellt werden, für die Verklebung von Gummi hervorragend geeignet sind, da die erzielbaren Trennfestigkeiten der Verklebungen einerseits deutlich über den Trennfestigkeiten liegen, die mit den Polyurethanen gemäß Stand der Technik erzielbar sind, und da andererseits die genannten Nachteile, die im Falle eines Zusatzes von Carbonsäuren zu Polyurethanklebstofflösungen beobachtet werden mußten, nicht mehr eintreten. Die neun, erfindungsgemäßen Verfahrensprodukte eignen sich im übrigen such zur Verklebung beliebiger sonstiger Substrate.

Gegenstand der vorliegenden Erfindung ist somit ein Verfahren zur Herstellung von Carbozylgruppen und chemisch fixierte ionische Gruppen aufweisenden Dihydroxypolyurethanen durch Umsetzung von Dihydroxypolyestern des Molekulargewichtsbereichs 600—8000, sowie gegebenenfalls Diolen des Molekulargewichtsbereichs 62—300 mit organischen Diisocyanaten in der Schmelze oder in Gegenwart von organischen Lösungsmitteln nach dem Einkomponentenoder nach dem Präpolymerverfahren, dadurch gekennzeichnet, daß man die Umsetzung in Gegenwart von Carboxylgruppen und zwei Hydroxylgruppen enthaltenden, sowie in Gegenwart von ionische Gruppen und zwei Hydroxylgruppen aufweisenden Verbindungen durchführt.

Gegenstand der vorliegenden Erfindung ist auch die Verwendung der hergestellten Produkte als Klebstoff bzw. Klebsteffrohstoff zum verkleben beliebiger Substrate und insbesondere zum Verkleben von Gummi mit sich selbst und anderen Materialien.

Ausgangsmaterialien für das erfindungsgemäße Verfahren sind organische Diisocyanate, Dihydroxypolyester, gegebenenfalls niedermolekulare Kettenverlängerungsmittel und sowohl Carboxylgruppen aufweisende Verbindungen als auch ionische Gruppen aufweisende Verbindungen mit jeweils Hydroxylgruppen. Demzufolge handelt es sich bei den erfindunsgemäßen Verfahrensprodukten um vorwiegend lineare Polyurethane. Die Mitverwendung geringer Mengen von höher als difunktionellen Aufbaukomponenten beispielsweise geringer Mengen an Trimethylolpropan zwecks Erreichung eines gewissen Verzweigungsgrades beim erfindungsgemäßen Verfahren soll hierdurch jedoch nicht ausgeschlossen sein, da eine derartige geringe Verzweigung der erfindungsgemäßen Verfahrensproduckte oft von Vorteil sein kann.

Für das erfindungsgemäße Verfahren geeignete Diisocyanate sind insbesondere solche der Formel

$$Q(NCO)_2\ ,$$

in welcher

Q für einen aliphatischen Kohlenwasserstoffrest mit 4—10, vorzugsweise 6, Kohlenstoffatomen, einen cycloaliphatischen Kohlenwasserstoffrest mit 5—15 Kohlenstoffatomen, vorzugsweise 6—13 Kohlenstoffatomen, einen aromatischen Kohlenwasserstoffrest mit 6—15, vorzugsweise 7—13, Kohlenstoffatomen oder einen araliphatischen Kohlenwasserstoffrest mit 8 Kohlenstoffatomen steht.

Bevorzugt werden beim erfindungsgemäßen Verfahren die genannten aromatischen Diisocyanate eingesetzt. Typische Vertreter geeigneter Diisocyanate sind z.B. 1,4-Butandiiso 1,6-Hexandiisocyanat, 1,4 - Cychlohexylendiisocyanat, 1 - Methyl - 2,4 - diisocyanato - cyclohexan, 1 - Methyl - 2,6 - diisocyanato - cyclohexan, 1 - isocyanato - 3 - isocyanatomethyl - 3,5,5 - trimethy - cyclohexan, 2, bzw. 2,6 6-Diisocyanatotoluol, 4,4' - Diphenylmethandiisocyanat, 4,4' - Diphenylpropandiisocyanat bzw. Gemische derartiger Diisocyanate. Besonders beverzugt geeignet ist 4,4' - Diphenylmethandiisocyanat.

Für das erfindungsgemäße Verfahren geeignete Dihydroxypolyester sind insbesondere solche eines über 600, vorzugsweise zwischen 1200 und 6000, besonders bevorzugt zwischen 2000 und 4000, leigenden Molekulargewichts, wie sie in bekannter Weise aus Alkandicarbonsäuren mit vorzungsweise mindestens 6 Kohlenstoffatomen und Alkandiolen mit vorzugsweise mindestens 4 Kohlenstoffatomen zugänglich sind. Geeignete Dicarbonsäuren sind beispielsweise Adipinsäure, Pimelinsäure, Korksäure, Acelainsäure, Sebazinsäure usw. Geeignete Alkandiole sind beispielweise Butandiol-1,4 Pentandiol-1,5 oder Hexandiol-1,6. Weitere geeignete Polyester sind auch Dihydroxylpolycarbonate, insbesondere auf Basis von Hexandiol-1,6 sowie endständige Hydroxylgruppen aufweisende Veresterungsprodukte geradkettiger Hydroxylalkanmonocarbonsäuren mit mindestens 5 Kohlenstoffatomen wei z.B. ε-Hydroxycapronsäure bzw. die entsprechenden Lactonpolymerisate.

Dihydroxypolyester aus: Adipinsäure und Butandiol-1,4 aus Adipinsäure und Hexandiol-1,6, Dihydroxypolyester auf Basis von ε-Caprolactam sowie Dihydroxy-polyhexamethylencarbonate der genannten Molekulargewichtsbereiche sind besonders gut geeignet.

Bei der Durchfürung des erfindungsgemäßen Verfahrens werden oft die in der Polyurethanchemie an sich bekannten Kettenverlängerungsmittel mitverwendet, obwohl die Mitverwendung deratiger Kettenverlängerungsmittel nicht zwingend erforderlich ist. Bei diesen Kettenverlängerungsmitteln handelt es sich insbesondere um Diole oder Diol-Gemische des Molekulargewichtsbereichs 62—300, vorzugsweise 62—150. Geeignete derartige Diole sind z.B. Esterdiole des genannten Molekulargewichtsbereichs wie z.B. Terephthalsäure-bis - 2 - hydroxyäthylester, Ätherdiole des genannten Molekulargewichtsbereichs wie z.B. Hydrochinon-bis - 2 - hydroxyäthyläther. Vorzugsweise werden als Kettenverlängerungsmittel jedoch einfache Alkandiole mit 2—8, vorzugsweise 4—6, Kohlenstoffatomen wie Äthylenglykol, Trimethylenglykol, Tetramethylenglykol, Pentamethylenglykol oder Hexandiol-1,6 eingesetzt. Die Kettenverlangerungsmittel werden im allgemeinen beim erfindungsgemäßen Verfahren in solchen Mengen eingesetzt, daß auf jedes Mol des Dihydroxypolyesters 0—1, vorzugsweise 0,3—0,7, Mol des Kettenverlängerungsmittels entfallen. Bei der oft bevorzugten Verwendung eines Gemischs aus mindestens 2 der genannten Kettenverlängerungsmittel, beispielsweise bei Verwendung eines Gemischs aus Tetramethylenglykol und Hexamethylenglykol, beziehen sich die genannten Mengen auf jedes der im Gemisch vorliegenden Glykole, so daß die Gesamtmenge des Glykolgemisches so bemessen werden kann, daß pro Mol Dihydroxypolyester bis zu 2 Mol, vorzugsweise bis zu 1,4 Mol, Glykol vorliegen.

Erfindungswesentlich bei der Durchführung des erfindungsgemäßen Verfahrens ist die Mitverwendung von

a) Carboxylgruppen aufweisenden Verbindungen, welche neben den Carboxylgruppen noch zwei Hydroxygruppen enthalten, und von

b) ionische Gruppen und zwei Hydroxylgruppen aufweisenden Aufbaukomponenten

Die unter a) und b) genannten Verbindungen werden in solchen Mengen mitverwendet, daß in den Verfahrensprodukten 0,01 bis 1,0, vorzugsweise 0,02 bis 0,4, Gew.—% an Carboxylgruppen —COOH und 0,1 bis 10, vorzugsweise 0,5 bis 5, Milliäquivalent pro 100 g an ionischen Gruppen vorliegen.

Unter ionischen Gruppen sind in diesem Zusammenhang insbesondere homöopolar gebundene Ammoniumgruppen, Sulfoniumgruppen, Carboxylatgruppen, Sulfonatgruppen oder Phosphonatgruppen zu verstehen. Bevorzugte ionische Gruppen sind die Sulfonatgruppen $—SO_3^{\ominus}$.

Bei den unter a) genannten Aufbaukomponenten handelt es sich vorzugsweise um Dihydroxycarbonsäuren, wie insbesondere die 2,2-Dimethylolpropionsäure oder auch Dihydroxycarbonsäuren wie Weinsäure oder Estergruppen aufweisende Dihydroxycarbonsäuren, wie sie beispielsweise durch Umsetzung von Dicarbonsäureanhydriden wie z.B. Tetrahydrophthalsäureanhydrid mit Trimethylolpropan im Molverhältnis 1:1 auf einfache Weise zugänglich sind.

Geeignete Beispiele für die unter b) genannten Aufbaukomponenten sind entsprechend den oben gemachten Ausführungen, vorzugsweise Phosphonatgruppen, Carboxylatgruppen, Sulfonatgruppen, Ammoniumgruppen oder Sulfoniumgruppen aufweisende Diole, wobie im Falle der Herstellung von Ammoniumgruppen aufweisenden erfindungsgemäßen Verfahrensprodukten insbesondere unter Verwendung von Lösungsmitteln bei der Durchfürung des erfindungsgemäßen Verfahrens auch eine

Ausführungsform denkbar ist, bei welcher teriäre Aminstickstoffatome aufweisende Diole in das Polyurethan eingebaut werden, deren tertiäre Stickstoffatome erst nach Aufbau des Polyurethans durch Quaternierung, beispielsweise mit Dimethylsulfat, in quaternäre Ammoniumgruppen überführt werden. Ebenso wie bei allen anderen Reaktionspartnern für die Diisocyanate handelt sich bei den ionischen Aufbaukomponenten vorzugsweise um solche, welche 2 aliphatisch gebundene Hydroxylgruppen aufweisen.

Beispiele geeigneter Ammoniumgruppen aufweisender Glykole sind die Quaternierungsprodukte von alkoxylierten Aminen, vorzugsweise N-Alkyl-dialkanolaminen der Formel

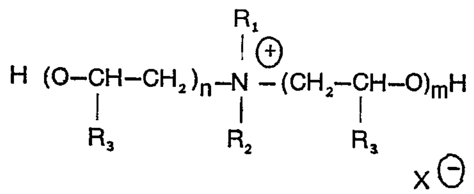

in welcher

n, m ganze Zahlen von 1 bis 20, vorzugsweise 1,
$R_1$ $C_1$—$C_8$-Alkyl, vorzugsweise —$CH_3$,
$R_2$ $C_1$—$C_8$-Alkyl, vorzugsweise—$CH_3$; —$C_2H_5$,—$C_3H_7$ oder —$C_4H_9$,
$R_3$ H oder —$CH_3$, vorzugsweise H und
$X^{\ominus}$ $R_1$—O—$SO_3^{\ominus}$ oder Halogenidionen wie $Cl^{(-)}$, $Br^{(-)}$ oder $J^{(-)}$ bedeuten.

Ein typisches Beispiel eines Sulfoniumgruppen aufweisenden Diols wäre die Verbindung der Formel

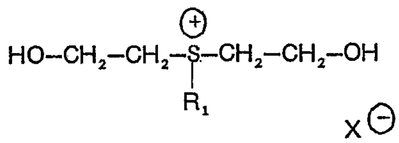

in welcher

$R_1$ und X die bereits genannte Bedeutung haben.

Beispiele geeigneter Sulfonatgruppen aufweisender Glykole sind die im Rahmen der vorliegenden Erfindung besonders bevorzugten ionischen Aufbaukomponenten der Formel

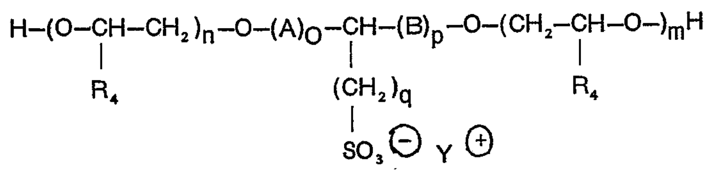

in welcher

A und B für gleiche oder verschiedene aliphatische Kohlenwasserstoffreste mit 1 bis Kohlenstoffatomen stehen,
$R_4$ für H oder —$CH_3$,
$Y^{\oplus}$ für eine Alkalimetall-Kation oder eine gegebenenfalls substituierte Ammoniumgruppe steht,
n und m für gleiche oder verschiedene Zahlen von 0 bis 30,
o und p für jeweils 0 oder 1 und
q für eine ganze Zahl von 0 bis 2 steht;

Verbindungen der Formel

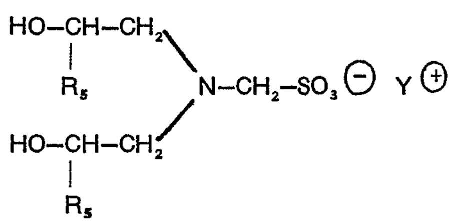

in welcher

$Y^{\ominus}$ die bereits genannte Bedeutung hat und

$R_5$ für einen $C_1$—$C_8$-Alkylrest oder ein Wasserstoffatom, vorzugsweise für ein Wasserstoffatom steht;

oder

Verbindungen der Formeln

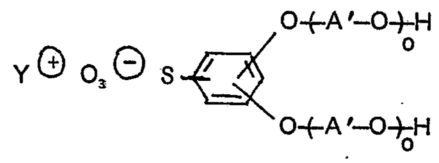

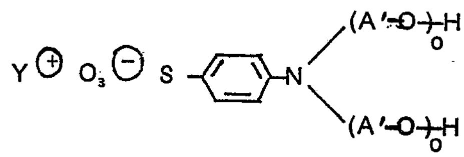

in welchen
$Y^{\oplus}$ die bereits genannte Bedeutung hat und
A' für einen Rest der Formel

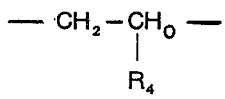

steht,
wobei
$R_4$ die bereits genannte Bedeutung hat und o eine ganze Zahl von 1 bis 15 bedeutet.

Geeignete Carboxylatgruppen aufweisende Aufbaukomponenten sind beispielsweise die Alkali- sowie gegebenenfalls an der Ammoniumgruppe substituierte Ammoniumsalze der bereits beispielhaft genannten Dihydroxycarbonsäuren.

Geeignete Phosphonatgruppen aufweisende Diole sind beispielsweise Verbindungen der Formeln

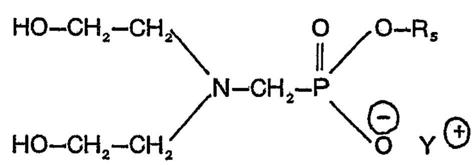

und

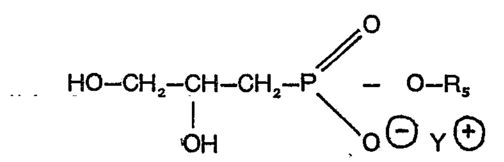

in welchen
$Y^{\oplus}$ und $R_5$ die bereits genannte Bedeutung haben.

Grundsätzlich können als ionische Aufbaukomponenten beim erfindungsgemäßen Verfahren alle beliebigen organischen Verbindungen eingesetzt werden, welche neben 2 aliphatisch gebundenen Hydroxylgruppen mindestens 1 Ammonium-, Sulfonium-, Carboxylat-, Sulfonat- oder Phosphonatgruppe aufweisen und ansonsten unter den Beningungen des erfindungsgemäßen Verfahrens inert sind. Derartige ionische Aufbaukomopoenten zur Herstellung von ionisch modifizierten Polyurethanen sind beispielsweise die difunktionellen ionischen Aufbaukomponenten der US—PS 3 479 310, DT—OS 2 446 440, DT—OS 2 426 401, DT—OS 2 417 664, DT—OS 2 410 862 oder US—PS 3 708 303 bzw. die den in diesen Literaturstellen beschriebenen, im Sinne der Isocyanat-Additionsreaktion difunktionellen Aufbaukomponenten mit potentiellen ionischen Gruppen entsprechenden, durch Quaternierung oder Neutralisation der potentiellen ionischen Gruppen erhältlichen ionischen Aufbaukomponenten.

Die ionischen Gruppen bzw. Carboxylgruppen aufweisenden Diole werden beim erfindungsgemäßen Verfahren vorzugsweise als separate Aufbaukomponenten mitverwendet. Es wäre jedoch grundsätzlich auch denkbar, beispielsweise die beispielhaft genannten niedermolekularen ionische Gruppen aufweisenden Glykole als Aufbaukomponente bei der Herstellung der beim erfindungsgemäßen Verfahren einzusetzenden Dihydroxypolyester mitzuverwenden, d.h. die ionischen

Gruppen bereits über die Stufe der beim erfindungsgemäßen Verfahren einzusetzenden Dihydroxypolyester in die erfindungsgemäßen Verfahrensprodukte einzubauen.

Die Menge der Carboxylgruppen bzw. ionische Gruppen aufweisenden Aufbaukomponenten wird bei der Durchführung des erfindungsgemäßen Verfahren so bemessen, daß der Gehalt der erfindungsgemäßen Verfahrensprodukte an Carboxylgruppen und an ionischen Gruppen innerhalb des o.g. Bereichs liegt.

Die Durchführung des erfindungsgemäßen Verfahrens erfolgt vorzugsweise im Eintopfverfahren, d.h. durch Umsetzung der Diisocyanat-Komponente mit einem Gemisch aller Verbindungen mit gegenüber Isocyanatgruppen reaktionfähigen Wasserstoffatomen, wobei vorzugsweise in der Schmelze bei 50 bis 200, vorzugsweise 80 bis 150°C, in einem NCO/OH-Molverhältnis von 0,9:1 bis 0,999:1 gearbeitet wird, so daß stets endständige Hydroxylgruppen aufweisende Verfahrensprodukte entstehen. Die Umsetzung kann selbstverständlich auch in Gegenwart von inerten Lösungsmitteln. wie z.B. Toluol, Methyläthylketon, Essigsäureäthylester oder Dimethylformamid bzw. in Gegenwart von Gemischen derartiger Lösungsmittel durchgeführt werden.

Das erfindungsgemäße Verfahren kann jedoch auch nach dem Präpolymerprinzip erfolgen, wobie beispielsweise die Polyester-Komponente mit der Diisocyanat-Komponente in einem über 1:1 liegenden NCO/OH-Molverhältnis bei 50 bis 150°C zu einem NCO-Präpolymeren umgesetzt wird, welches anschließend mit einem Gemisch aus Carboxylgruppen aufweisendem Glykol, ionische Gruppen aufweisendem Glykol und gegebenenfalls einfachem Glykol-Kettenverlängerungsmittel bei 80 bis 200°C kettenverlängert wird. Auch hier kann sowohl bei der Herstellung der Präpolymeren als auch bei der Kettenverlängerungsreaktion in der Schmelze oder in Gegenwart von Lösungsmitteln gearbeitet werden. Selbstverständlich sind Varianten denkbar, beispielsweise dergestalt, daß bereits bei der Herstellung des NCO-Präpolymeren ein oder zwei der genannten Glykol-Typen mitverwendet werden, während dann die Kettenverlängerungsreaktion unter Verwendung der restlichen Glykoltypen erfolgt.

Die erfindungsgemäßen Verfahrensprodukte stellen wertvolle Klebstoffe bzw. Klebstoffrohstoffe zum Verkleben beliebiger Substrate, insbesondere aber zur Verklebung von Gummi mit sich selbst oder anderen Materialien, dar. Zur erfindungsgemäßen Verwendung werden die erfindungsgemäßen Verfahrensprodukte in Form von Lösungen in geeigneten Lösungsmitteln beispielsweise der oben bereits beispielhaft genannten Art oder aber als Schmelze verarbeitet. Bevorzugt werden die erfindungsgemäßen Verfahrensprodukte in Form von 10—40—gew.-%igen Lösungen in polaren Lösungsmitteln, beispielsweise Aceton oder Methyläthylketon, verwendet. Die Viskosität dieser Klebstofflösungen kann durch Variation des Gehalts an Hydroxylpolyurethan den speziellen Erfordernissen des Klebeverfahrens oder der zu verklebenden Materialien angepaßt werden. Die Herstellung der erfindungsgemäß zu verwendenden Lösungen der erfindungsgemäßen Hydroxylpolyurethane geschieht vorteilhaft durch einfaches Auflösen der Polyurethane in den zum Einsatz gelangenden polaren Lösungsmitteln bei Raumtemperatur bzw.bei mäßig erhöhter Temperatur. Falls die Herstellung der Hydroxylpolyurethane in Lösung erfolgte, kann das zur Herstellung evtl. verwendete unpolare Lösungsmittel entweder zunächst abgezogen werden, oder es kann auch dem System eine dem jeweiligen Verwendungszweck angepaßte Menge an polarem Lösungsmittel ohne vorheriges Abziehen des unpolaren Lösungsmittels zugegeben werden. Bei Verwendung von polaren Lösungsmitteln während der Herstellung der Polyurethane entstehen direkt verwendbare Lösungen.

Zur Erreichung spezieller Eigenschaften, z.B zur Verlängerung der Kontaktbindezeit, können den beschriebenen Klebstoffen natürliche oder synthetische Harze, wie z.B. Phenolharze, Ketonharze, Colophoniumderivate, Phthalatharze, Acetyl- oder Nitrocellulose oder andere Stoffe, wie z.B. Silikatfüllstoffe, zugefugt werden. Auch der Zusatz von Vernetzungsmitteln, beispielsweise von höherfunktionellen Polyisocyanaten wie z.B. Phosphorsäure - tris - isocyanatophenylester oder Tris - isocyanato - toloyl - isocyanurat, zu den Klebstofflösungen ist möglich.

Die erfindungsgemäßen Verfahrensprodukte können jedoch auch aus der Schmelze verabeitet werden. In beiden Fällen werden zur Verarbeitung die als Lösung oder Schmelze vorliegenden Klebstoffe auf die gegebenenfalls gerauhten oder in anderer Weise vorbehandelten, zu verklebenden Werkstoffoberflächen gebracht. Dies kann mittels Walze, Pinsel, Spachtel Spritzpistole oder einer anderen Vorrichtung geschehen. Die Klebstoffaufstriche werden zum weitgehenden Abdampfen der in ihnen enthaltenen Lösungsmittel und zur Aktivierung beispielsweise auf ca. 50 bis 150, vorzugsweise ca. 55 bis 100°C, erhitzt und anschließend sofort mit Preßdruck zusammengefügt oder es wird—einer bevorzugten Variante dieser Erfindung entsprechend — auf eine mit einer bereits angetrockneten Klebstoffschicht versehenen Werkstoffoberfläche ein auf 120 bis 200°C erhitzter, flüssiger Kunststoff, z.B. ein weichmacherhaltiges Vinylchloridpolymerisat, im Spritzgußverfahren aufgebracht.

Mit den erfindungsgemäßen Verfahrensprodukten können zahlreiche Werkstoffe, wie Papier, Pappe, Holz, Metall und Leder, mit hoher Festigkeit verklebt werden. Bevorzugt eignen sie sich zum Kleben von Gummimaterialien und anderer Kunststoffe, wie u.a. Polyurethan-Schaumstoffen mit kompakter Oberfläche und — soweit sie in inrer sonstigen Zusammensetzung der DT—PS 1 256 822 entsprechen — weichmacherhaltigen Homo- oder Mischpolymerisaten des Vinylchlorid, vor allem zum Kleben von Sohlen aus diesen Materialien auf Schuhschäfte aus Leder oder Syntheseleder.

Die erfindungsgemäßen Verfahrensprodukte eignen sich im übrigen auch hervorragend als

Beschichtungsmittel für die verschiedensten Substrate, insbesondere für Gummi.

In den nachfolgenden Beispielen wurden folgende Ausgangsmaterialien eingesetzt:

Ionische Aufbaukomponenten

I 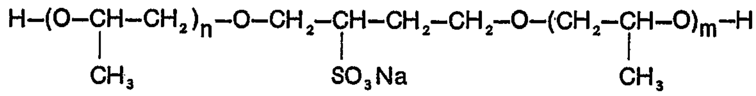

n + m ~4, Molekulargewicht 425

II 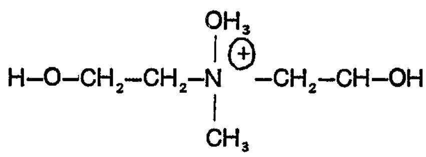 $CH_3O{-}SO_3^{\ominus}$

III 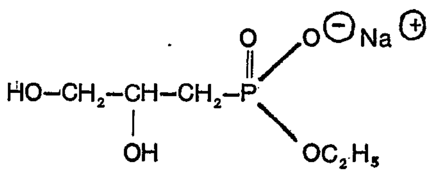

IV 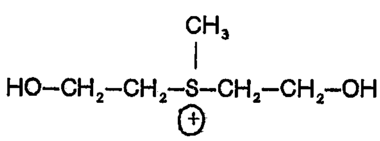 $CH_3OSO_3^{\ominus}$

*Polyester*

A) Hexandiol-1,6-polyadipat; Hydroxylzahl 49,8

B) Polycaprolacton; Hydroxylzahl 55,7

C) Hexandiol-1,6-polyadipat; Hydroxylzahl 37,5

Beispiele 1—12

Herstellung der Polyurethane (allgemeine Herstellungsvorschrift):

1 Mol des Polyesters werden mit der in Tabelle 1 angege-benen Anzahl an Molen des Kettenverlängerungsmittels (Butandiol bzw. Hexandiol), der in der Tabelle 1 angegebenen Anzahl Mole der ionischen Aufbaukomponenten und der in der Tabelle 1 angegebenen Anzahl Mole Dimethylolpropionsäure vermischt. Das Gemisch wird anschließend bei 100°C im Wasserstrahlvakuum entwässert.

Anschließend erfolgt bei 120°C die Zugabe der in der Tabelle 1 angegebenen Anzahl Mole an 4,4'-Diisocyanatodiphenylmethan zu dem Diolgemisch. Das Reaktionsgemisch wird 2 Minuten verrührt. Die heiße Schmelze wird anschließend in eine Teflonschale gegossen und 15 Stunden bei 110°C im Heizschrank getempert. Nach Abkühlen auf Raumtemperatur erhält man ein festes Produkt, welches als 15 %ige Lösung in Methyäthylketon die in Tabelle 1 angegebene Viskosität aufweist.

TABELLE 1

| Beispiel | Polyester | Kettenverlängerer | ionischer Zusatz | Dimethylol-propionsaure | 4,4'-Diisocyanato-diphenylmethan | mPas, 15 %ig in MEK 25°C |
|---|---|---|---|---|---|---|
| 1 | 1 Mol A | 0,4 Mol Butandiol-1,4 | 0,1 Mol I | 0,12 Mol | 1,56 Mol | 870 |
| 2 | 1 Mol A | 0,4 Mol ,, | — | 0,12 Mol | 1,50 Mol | 950 |
| 3 | 1 Mol A | 0,3 Mol ,, | 0,1 Mol I | — | 1,48 Mol | 800 |
| 4 | 1 Mol A | 0,4 Mol ,, | 0,05 Mol II | — | 1,44 Mol | 1050 |
| 5 | 1 Mol A | 0,4 Mol ,, | 0,05 Mol II | 0,05 Mol | 1,48 Mol | 900 |
| 6 | 1 Mol C | 0,3 Mol ,,<br>u. 0,3 Mol Hexandiol-1,6 | 0,05 Mol I | 0,05 Mol | 1,67 Mol | 1000 |
| 7 | 1 Mol A | 0,4 Mol ,, | 0,2 Mol I | 0,2 Mol | 1,76 Mol | 800 |
| 8 | 1 Mol B | 0,4 Mol ,, | 0,05 Mol I | 0,05 Mol | 1,48 Mol | 650 |
| 9 | 1 Mol A | 0,4 Mol ,, | 0,11 Mol III | 0,05 Mol | 1,54 Mol | 900 |
| 10 | 1 Mol A | 0,4 Mol ,, | 0,05 Mol IV | 0,05 Mol | 1,48 Mol | 800 |
| 11 | 1 Mol A | 0,4 Mol ,, |  | 0,5 % Fumarsäure zur Klebstofflösung | 1,38 Mol | 1000 |
| 12 | 1 Mol A | 0,4 Mol ,, | — | — | 1,38 Mol | 1000 |

Unter Verwendung der in Tabelle 1 genannten Klebstofflösungen wurden folgende Materialien miteinander verklebt:

Material A:

Vulkanisierter Styrol-Butadien-Kautschuk der Shore Härte 96, mechanisch gerauht.

Material B:

Vulkanisierter Styrol-Butadien-Kautschuk der Shore A-Härte 61, mechanisch gerauht.

Zur Verklebung wurden die Prüflinge beidseitig mit 250 g/m$^2$ der Klebstofflösung beschichtet, das Lösungsmittel wird bei 80°C verdunstet, gleichzeitig erfolgt durch die Wärmebehandlung eine Aktivierung der Klebstoffschicht. Die Verklebung erfolgte durch Zusammenpressen der mit der aktivierten Klebstoffschicht versehenen Prüflinge unter gelindem Druck. Nach neuntägiger Lagerung wurden die in Tabelle 2 zusammengestellten Trennfestigkeiten in kp/cm ermittelt:

Tabelle 2

| Beispiel | Material A | Material B |
|---|---|---|
| 1 | 11,8 | 6,1 |
| 2 | 6,4 | 3,2 |
| 3 | 6,9 | 3,4 |
| 4 | 6,5 | 3,3 |
| 5 | 11,5 | 6,9 |
| 6 | 12,3 | 6,6 |
| 7 | 11,7 | 6,5 |
| 8 | 11,5 | 5,8 |
| 9 | 11,8 | 5,5 |
| 10 | 11,8 | 6,3 |
| 11 | 12,0 | 5,7 |
| 12 | 5,2 | 3,1 |

Zur Prüfung der Lagerstabilität von Klebstofflösungen der erfindungsgemäßen Verfahrensprodukte wurden aus den Dihydroxypolyurethanen gemäß Beispielen 1, 5, 6, 11, und 12 20-%ige Lösungen in Methyläthylketon hergestellt. In der nachstehenden Tabelle 3 ist die Viskositätsabnahme der Lösungen bei 20°C und in der nachstehenden Tabelle 4 die Viskositätsabnahme der Lösungen bei 70°C zusammengefaßt.

Tabelle 3

| Beispiel | Anfangsviskosität [mPas.] | nach 1 Monat | nach 3 Monaten |
|---|---|---|---|
| 1 | 4300 | 4100 | 4000 |
| 5 | 4800 | 4700 | 4700 |
| 6 | 5100 | 5100 | 5000 |
| 11 | 5200 | 5000 | 2300 |
| 12 | 5200 | 5300 | 5200 |

Tabelle 4

| Beispiel | Anfangsviskosität [mPas.] | nach 1 Monat |
|---|---|---|
| 1 | 4300 | 4000 |
| 5 | 4800 | 4500 |
| 6 | 5100 | 5000 |
| 11 | 5200 | 900 |
| 12 | 5200 | 5100 |

**Patentansprüche**

1. Verfahrenzur Herstellung von Carboxylgruppen und chemisch fixierte ionische Gruppen aufweisenden Dihydroxypolyurethanen durch Umsetzung von Dihydroxypolyestern des Molekulargewichtsbereichs 600—8000, sowie gegebenenfalls Diolen des Molekulargewichtsbereichs 62—300 mit organischen Diisocyanaten in der Schmelze oder in Gegenwart von organischen Lösungsmitteln nach dem Einkomponenten- oder nach dem Präpolymerverfahren, dadurch gekennzeichnet, daß man die Umsetzung in Gegenwart von Carboxylgruppen und zwei Hydroxylgruppen enthaltenden, sowie in Gegenwart von ionische Gruppen und zwei Hydroxylgruppen aufweisenden Verbindungen durchführt.

2. Verwendung der gemäß Anspruch 1 hergestellten, ionische Gruppen und Carboxylgruppen aufweisenden Dihydroxypolyurethane als Klebstoff oder Klebstoffrohstoff zum Verkleben beliebiger Substrate.

3. Verwendung der gemß Anspruch 1 hergestellten, ionische Gruppen und Carboxylgruppen auf weisenden Dihydroxypolyurethane zum Verkleben von Gummi mit sich selbst oder anderen Materialien.

**Revendications**

1. Procédé de préparation de dihydroxypolyuréthannes portant des groupes ioniques fixés chimiquement et des groupes carboxyles par réaction de dihydroxypolyesters de poids moléculaire 600 à 8000 et le cas échéant de diols de poids moléculaire 62 à 300 avec des diisocyanates organiques à l'état fondu ou en présence de solvants organiques par la technique à un seul composant ou la technique au prépolymère, ce procédé se caractérisant en ce que l'on effectue la réaction en présence de composés contenant des groupes carboxyles et deux groupes hydroxy et en présence de composés portant des groupes ioniques et deux groupes hydroxy.

2. Utilisation des dihydroxypolyuréthannes portant des groupes ioniques et des groupes carboxyles, préparés par le procédé selon la revendication 1, en tant qu'adhésifs ou matières premières d'adhésifs, pour le collage de supports quelconques.

3. Utilisation des dihydroxypolyuréthannes portant des groupes ioniques et des groupes carboxyles, préparés par le procédé selon la revendication 1, pour le collage du caoutchouc sur lui-même ou sur d'autres matériaux.

**Claims**

1. Process for the preparation of dihydroxypolyurethanes containing carboxyl groups and chemically fixed ionic groups by the reaction of dihydroxypolyesters having molecular weights of from 600 to 8000 and optionally diols having molecular weights of from 62 to 300 with organic diisocyanates without solvents or in the presence of organic solvents by the one-shot process or the prepolymer process, characterized in that the reaction is carried out in the presence of compounds which contain carboxyl groups and two hydroxyl groups and in the presence of compounds which contain ionic groups and two hydroxyl groups.

2. Use of the dihydroxypolyurethanes containing ionic groups and carboxyl groups prepared according to Claim 1 as adhesives or raw materials for adhesives for bonding and substrates.

3. Use of the dihydroxypolyurethanes containing ionic groups and carboxyl groups prepared according to Claim 1 for bonding rubber to rubber or to other materials.